# FASCICULE DE BREVET EUROPEEN

(11) **EP 0 764 564 B1**
(45) Date de publication et mention de la délivrance du brevet: **29.09.1999**
(21) Numéro de dépôt: 96401702.4
(22) Date de dépôt: 30.07.1996
(51) Int. Cl.: B60R 25/00, B60R 25/04, G07C 9/00

(54) **Dispositif antivol pour véhicule**
Antidiebstahlvorrichtung für Kraftfahrzeug
Vehicle anti-theft device

(30) Priorité: 20.09.1995 FR 9511053
(43) Date de publication de la demande: 26.03.1997
(73) Titulaire: AUTOMOBILES PEUGEOT, 75116 Paris (FR); AUTOMOBILES CITROEN, 92200 Neuilly-sur-Seine (FR)
(72) Inventeur: Le Guern, René, 78650 Beynes (FR)
(74) Mandataire: Habasque, Etienne Joel Jean-François

(56) Documents cités:
- EP-A- 0 272 230
- EP-A- 0 637 528
- WO-A-91/15645
- WO-A-93/22164
- WO-A-93/23270
- DE-U- 9 307 176
- US-A- 4 604 708
- US-A- 5 170 431
- US-A- 5 422 632

## Description

La présente invention concerne un dispositif antivol pour véhicule, comme défini par les caractéristiques citées dans le préambule de la revendication 1, connu du document EP-A-0 637 528.

Plus particulièrement, la présente invention concerne les dispositifs antivols qui peuvent être utilisés dans des véhicules automobiles classiques ou dans d'autres véhicules, de type par exemple à deux roues, tels que des scooters ou autres.

On connaît déjà dans l'état de la technique, des dispositifs antivols de ce type qui comportent des moyens de commande du fonctionnement de moyens de motorisation du véhicule pour verrouiller ou déverrouiller le fonctionnement de ceux-ci.

Ces moyens comprennent par exemple des moyens d'entrée d'un code de déverrouillage par un utilisateur, des moyens de stockage d'un code de déverrouillage d'utilisateur et d'un code de déverrouillage de constructeur et des moyens de comparaison des codes entré et stockés pour déverrouiller le fonctionnement du véhicule en cas de correspondance.

Le code de déverrouillage d'utilisateur est établi et entré par l'utilisateur dans les moyens de stockage des moyens de verrouillage/déverrouillage.

Le code de déverrouillage de constructeur est établi et entré par le constructeur dans les moyens de stockage des moyens de verrouillage/déverrouillage et est utilisé lorsque l'utilisateur a oublié son propre code.

En effet, lorsque l'utilisateur a oublié son propre code, il peut demander au constructeur du véhicule, le code de déverrouillage de constructeur.

Après vérification notamment concernant un vol possible du véhicule, le constructeur délivre à l'utilisateur, le code de constructeur.

Cependant, ceci présente un certain nombre d'inconvénients, car ce code de constructeur étant figé, sa divulgation entraîne une perte d'intérêt de ce type de dispositifs antivols.

Le but de l'invention est donc de résoudre ces problèmes.

A cet effet, l'invention a pour objet un dispositif antivol pour véhicule, avec les caractéristiques définies dans la revendication 1.

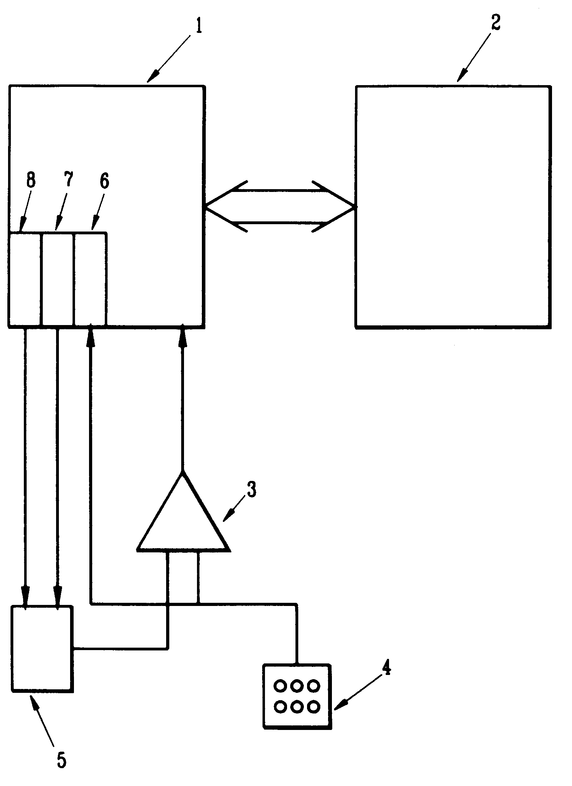

L'invention sera mieux comprise à la lecture de la description qui va suivre, donnée uniquement à titre d'exemple et faite en se référant au dessin annexé qui représente un schéma synoptique illustrant la structure d'un dispositif antivol notamment pour véhicule, selon l'invention.

On reconnaît sur cette figure, un dispositif antivol notamment pour véhicule, du type comportant des moyens de verrouillage/déverrouillage du fonctionnement du véhicule et plus particulièrement des moyens de motorisation de celui-ci par exemple.

Sur cette figure, les moyens de verrouillage/déverrouillage sont désignés de façon générale par la référence 1, tandis que les moyens de motorisation du véhicule sont désignés par la référence générale 2.

Ces moyens de verrouillage/déverrouillage sont reliés à la sortie de moyens de comparaison désignés par la référence générale 3 recevant sur une première entrée, la sortie de moyens d'entrée d'un code de déverrouillage, désignés par la référence générale 4 et sur une seconde entrée,la sortie de moyens de stockage de codes de déverrouillage, désignés par la référence générale 5.

En fait, les moyens 4 d'entrée de code sont destinés à être utilisés par l'utilisateur pour entrer dans le dispositif, un code de déverrouillage du fonctionnement du véhicule.

Les moyens de stockage 5 sont quant à eux destinés à permettre la mémorisation d'un code de déverrouillage d'utilisateur établi par cet utilisateur et d'un code de déverrouillage de constructeur établi par le constructeur, tandis que les moyens de comparaison sont adaptés pour comparer les codes entré et stockés pour permettre le déverrouillage du fonctionnement des moyens de motorisation du véhicule en cas de correspondance entre un code entré et un code stocké.

Le fonctionnement de ce type de dispositifs est bien connu dans l'état de la technique.

Selon l'invention, ce dispositif comporte en outre des moyens de détection de l'utilisation du code de déverrouillage de constructeur, ces moyens étant désignés par la référence générale 6 sur cette figure, pour déclencher le fonctionnement de moyens de remise à zéro du code d'utilisateur stocké et de moyens de génération pseudo-aléatoire d'un nouveau code de déverrouillage de constructeur destiné à remplacer le code de constructeur stocké précédemment dans les moyens de stockage.

Sur cette figure, les moyens de remise à zéro du code d'utilisateur sont désignés par la référence générale 7, tandis que les moyens de génération pseudo-aléatoire d'un nouveau code de déverrouillage de constructeur sont désignés par la référence générale 8.

On conçoit alors que dans le cas où l'utilisateur a oublié son propre code d'utilisateur et que le constructeur lui a fourni le code de deverrouillage de constructeur, et que ce code de constructeur est entré par l'utilisateur grâce aux moyens d'entrée de code 4 dans le dispositif, ce code de déverrouillage de constructeur permet à l'utilisateur de déverrouiller le fonctionnement du véhicule.

De plus, les moyens 6 de détection de l'utilisation de ce code déclenche le fonctionnement des moyens 7 de remise à zéro du code d'utilisateur et des moyens 8 de génération d'un nouveau code de déverrouillage de constructeur.

Le code de déverrouillage d'utilisateur étant remis à zéro, l'utilisateur peut enclencher une nouvelle phase d'entrée d'un code d'utilisateur dans les moyens de stockage, de façon classique.

Par contre, le nouveau code de déverrouillage de constructeur engendré de façon pseudo-aléatoire est entré directement dans les moyens de stockage de code 5 à la place du code de constructeur précédent et l'utilisateur n'a pas connaissance de celui-ci.

On notera que ces moyens de génération pseudo-aléatoire de code sont adaptés pour engendrer un nouveau code de déverrouillage de constructeur par exemple à partir d'une caractéristique d'identification, telle qu'un numéro de série, du véhicule et d'un nombre d'utilisations de code de déverrouillage de constructeur. Bien entendu, d'autres critères peuvent être envisagés.

Les moyens de détection 6, les moyens de remise à zéro 7 et les moyens de génération 8 peuvent en fait être directement intégrés par exemple dans les moyens de verrouillage/déverrouillage qui se présentent par exemple sous la forme d'une unité à calculateur de pilotage du fonctionnement des moyens de motorisation du véhicule.

Ces moyens se présentent alors par exemple sous la forme de programmes intégrés dans cette unité à calculateur.

Il va de soi bien entendu que ces moyens peuvent également être réalisés en logique câblée par des moyens distincts de ce calculateur.

Ces différents moyens pouvant présenter différentes structures classiques, on ne les décrira donc pas dans le détail.

On notera également que le constructeur peut disposer de moyens de génération pseudo-aléatoire de code, identiques à ceux intégrés dans le véhicule, pour pouvoir retrouver les codes successifs afin de délivrer à l'utilisateur le cas échéant, le nouveau code de déverrouillage de constructeur stocké dans le véhicule.

Il va de soi bien entendu que différentes structures classiques de moyens de génération pseudo-aléatoire de code de constructeur peuvent être utilisées.

## Revendications

1. Dispositif antivol pour véhicule, du type comportant des moyens (1) de commande du fonctionnement de moyens de motorisation (2) du véhicule pour verrouiller ou déverrouiller le fonctionnement de ceux-ci, comprenant des moyens (4) d'entrée d'un code de déverrouillage par un utilisateur, des moyens (5) de stockage d'un code de déverrouillage d'utilisateur et d'un code de déverrouillage de constructeur et des moyens (3) de comparaison des codes entré et stockés pour déverrouiller le fonctionnement du véhicule, en cas de correspondance, caractérisé en ce qu'il comporte en outre des moyens de détection (6) de l'utilisation du code de déverrouillage de constructeur pour déclencher le fonctionnement de moyens (7) de remise à zéro du code de déverrouillage d'utilisateur et de moyens (8) de génération pseudo-aléatoire d'un nouveau code de déverrouillage de constructeur destiné à remplacer le code de déverrouillage de constructeur stocké précédemment dans les moyens de stockage (5).

2. Dispositif selon la revendication 1, caractérisé en ce que les moyens (8) de génération pseudo-aléatoire du code de déverrouillage de constructeur sont adaptés pour engendrer un nouveau code de déverrouillage de constructeur à partir d'une caractéristique d'identification du véhicule et du nombre d'utilisations du code de déverrouillage de constructeur.

3. Dispositif selon la revendication 1 ou 2, caractérisé en ce que les moyens de commande comprennent une unité de commande (1) du fonctionnement de moyens de motorisation (2) du véhicule et en ce que les moyens de détection (6), les moyens de remise à zéro (7) et les moyens de génération (8) sont intégrés dans cette unité.

4. Dispositif selon l'une quelconque des revendications précédentes, caractérisé en ce que des moyens de génération pseudo-aléatoire de code de déverrouillage identiques à ceux intégrés dans le véhicule, sont prévus chez le constructeur pour lui permettre de retrouver les codes successifs de déverrouillage de constructeur.

## Claims

1. Anti-theft device for vehicles, of the type comprising means (1) for controlling the operation of means (2) for operating the engine of the vehicle for locking or unlocking the operation of the latter, comprising means (4) for entry of a user unlocking code, means (5) for storing a user unlocking code and a manufacturer's unlocking code and means (3) for comparing the codes entered and stored for unlocking the operation of the vehicle in the event that they correspond, characterised in that it includes in addition means (6) for detecting the use of the manufacturer's unlocking code for initiating the operation of means (7) for returning to zero the user code and means (8) for the pseudo-random generation of a new manufacturer's unlocking code designed to replace the manufacturer's unlocking code previously stored in the storage means (5).

2. Device according to claim 1, characterised that the means (8) for the pseudo-random generation of the manufacturer's unlocking code are designed to generate a new manufacturer's unlocking code starting from a characteristic which identifies the vehicle and from the number of utilisations of the manufacturer's unlocking code.

3. Device according to claim 1 or 2, characterised in that the control means comprise a control unit (1) for the operation of means (2) for operating the engine of the vehicle and in that the detecting means (6), the means (7) for returning to zero and the generating means (8) are integrated into this unit.

4. Arrangement according to any one of the foregoing claims, characterised in that means for the pseudo-random generation of the unlocking code identical with those integrated into the vehicle are provided at the premises of the manufacturer to allow him to recover the successive manufacturer's unlocking codes.

## Patentansprüche

1. Diebstahlsicherungsvorrichtung für Fahrzeug, des Typs, der Mittel (1) zum Steuern des Betriebs der Antriebsmittel (2) des Fahrzeugs enthält, um deren Betrieb zu sperren oder freizugeben, die ihrerseits versehen sind mit Mitteln (4) zum Eingeben eines Freigabecodes durch einen Benutzer, Mitteln (5) zum Speichern eines Benutzer-Freigabecodes und eines Hersteller-Freigabecodes sowie mit Mitteln (3) zum Vergleichen der eingegebenen und gespeicherten Codes, um den Betrieb des Fahrzeugs im Fall einer Entsprechung freizugeben, dadurch gekennzeichnet, daß sie außerdem Mittel (6) zum Erfassen der Benutzung des Hersteller-Freigabecodes enthält, um den Betrieb von Mitteln (7) für die Rücksetzung auf Null des Benutzer-Freigabecodes und von Mitteln (8) zur pseudozufälligen Erzeugung eines neuen Hersteller-Freigabecodes, der dazu vorgesehen ist, den vorher in den Speichermitteln (5) gespeicherten Hersteller-Freigabecodes zu ersetzen, auszulösen.

2. Vorrichtung nach Anspruch 1, dadurch gekennzeichnet, daß die Mittel (8) zur pseudozufälligen Erzeugung des Hersteller-Freigabecodes so beschaffen sind, daß sie einen netten Hersteller-Freigabecode anhand einer Identifizierungseigenschaft des Fahrzeugs und der Anzahl von Benutzungen des Hersteller-Freigabecodes erzeugen.

3. Vorrichtung nach Anspruch 1 oder 2, dadurch gekennzeichnet, daß die Steuermittel eine Steuereinheit (1) für den Betrieb der Antriebsmittel (2) des Fahrzeugs enthalten und daß die Erfassungsmittel (6), die Null-Rücksetzungsmittel (7) und die Erzeugungsmittel (8) in diese Einheit integriert sind.

4. Vorrichtung nach irgendeinem der vorangehenden Ansprüche, dadurch gekennzeichnet, daß die Mittel zur pseudozufälligen Erzeugung des Freigabecodes, die mit jenen, die in das Fahrzeug integriert sind, völlig übereinstimmen, beim Hersteller vorgesehen sind, um ihm zu ermöglichen, die aufeinanderfolgenden Hersteller-Freigabecodes wiederzugewinnen.
